(19) Europäisches Patentamt

European Patent Office

Office européen des brevets

(11) **EP 0 476 542 B1**

(12) **EUROPEAN PATENT SPECIFICATION**

(45) Date of publication and mention
of the grant of the patent:
**07.02.1996   Bulletin 1996/06**

(51) Int Cl.6: **H04N 9/79**, H04N 9/83

(21) Application number: **91115586.9**

(22) Date of filing: **13.09.1991**

(54) **Video signal processing apparatus for VCR**

Videosignalverarbeitungsgerät für VCR

Appareil de traitement de signal vidéo pour magnétoscope

(84) Designated Contracting States:
**DE FR**

(30) Priority: **19.09.1990 KR 1142790**

(43) Date of publication of application:
**25.03.1992   Bulletin 1992/13**

(73) Proprietor: **LG ELECTRONICS INC.**
**Seoul (KR)**

(72) Inventor: **Kim, Jong Wha Kyongwon Apt.**
**Kadong 402ho**
**Kyongkido, Korea (KR)**

(74) Representative:
**Müller, Hans-Jürgen, Dipl.-Ing. et al**
**D-80085 München (DE)**

(56) References cited:
**EP-A- 0 311 442        FR-A- 2 471 712**

• **PATENT ABSTRACTS OF JAPAN vol. 10, no.**
**201 (E-419)15 July 1986 & JP-A-61 043 088**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

# Description

## BACKGROUND OF THE INVENTION

### Field of the Invention

The present invention relates to a video cassette recorder having a video signal processing apparatus with means as set and in the precharacterizing portion of claim 1.

### Description of the Prior Art

Conventionally, in color modes on the colorcasting, there have been included PAL mode, NTSC mode, SECAM mode and MESECAM mode.

The PAL mode is mainly used in the European Continent, the NTSC mode is used in the Americas, including Korea, the SECAM mode is mainly used in the Eastern Europe, and the MESECAM mode is used in the Commonwealth of Austria and Brazil.

The color modes have different center frequencies, respectively.

For this reason, there has been required a multi-function VCR which is capable of being applied to all of the color modes.

A conventional video signal processing apparatus in the VCR as known from EP-AZ-0 311 442 utilizes a difference among different modulation frequencies in the color modes. The conventional video signal processing apparatus frequency/voltage-converts a color burst signal in the inputted chrominance signal and discriminates the color modes in accordance with a level of the converted voltage.

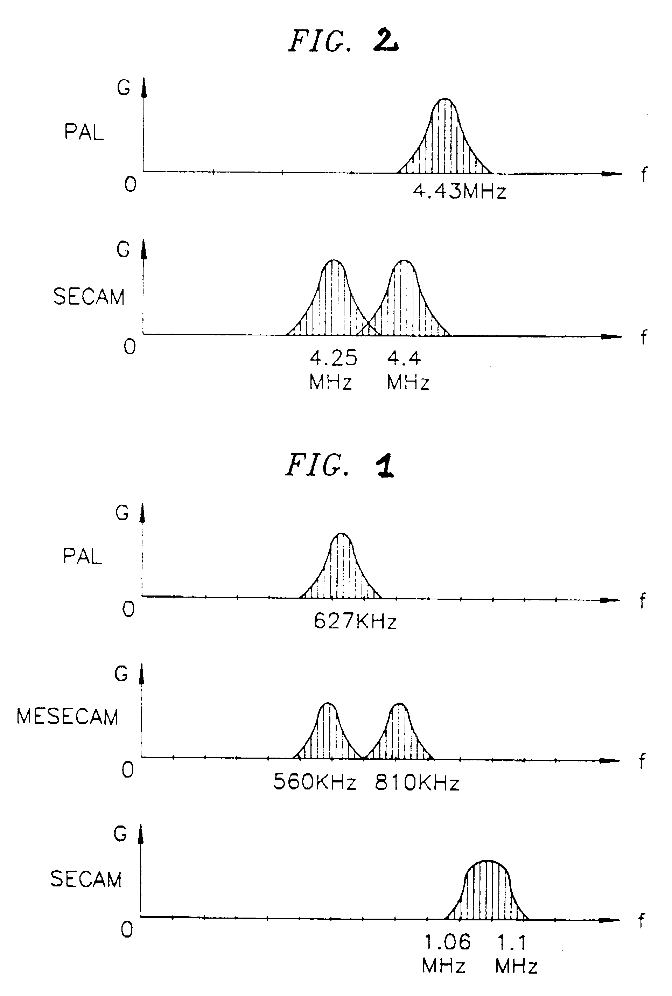

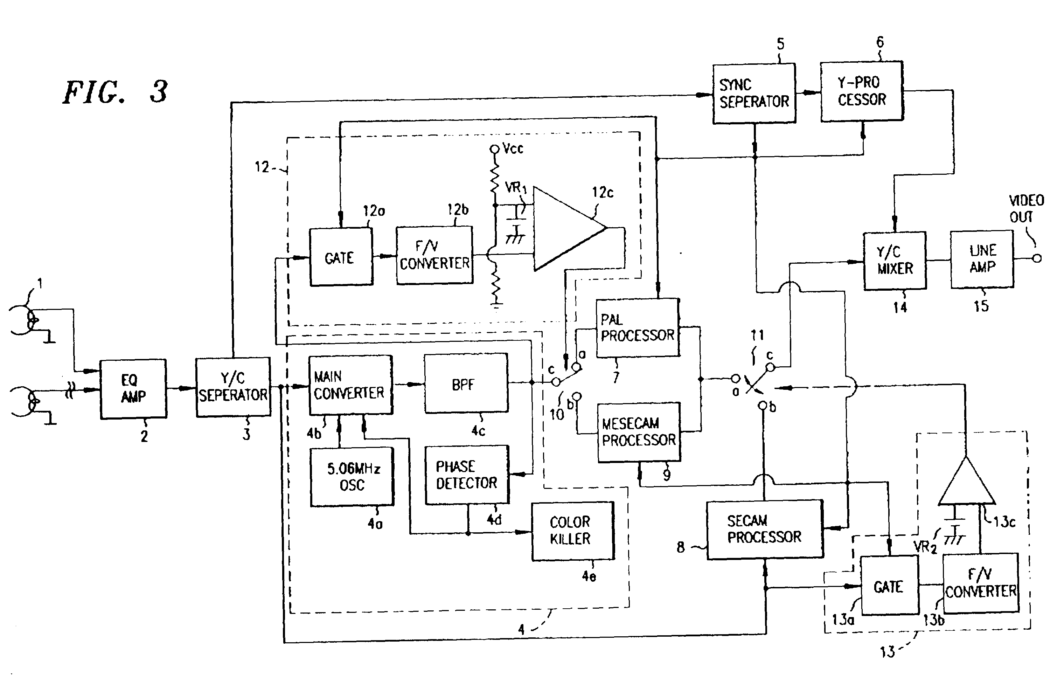

Fig. 1 illustrates a frequency spectrum of chrominance signals modulated in accordance with color modes and Fig. 2 illustrates a frequency spectrum of the original chrominance signals corresponding to the color modes. Fig. 3 is a block diagram of a conventional video signal processing apparatus for a VCR.

With reference to Fig. 3, the conventional video signal processing apparatus for the VCR comprises a VCR head 1 for detecting a video signal from a VCR tape, an equalizing amplifier 2 for amplifying the detected video signal by a predetermined level to compensate for a characteristic of the detected video signal, a Y/C separator 3 for separating a luminance signal and a chrominance signal from the amplified video signal, a low frequency converter 4 for converting the separated chrominance signal into a predetermined high frequency of PAL, SECAM signals, a synchronous separator 5 for separating a synchronous signal from the separated luminance signal, a luminance signal processor 6 for processing the luminance signal, from which the synchronous signal is separated, in accordance with the synchronous signal as a drive control signal, a PAL processor 7 for processing an output signal from the low frequency converter 4 in a PAL mode in accordance with the synchronous signal as a drive control signal, a SECAM processor 8 for converting the separated chrominance signal into a predetermined high frequency of SECAM signal and processing the inputted chrominance signal in a SECAM mode in accordance witn the synchronous signal as a drive control signal, and a MESECAM processor 9 for processing the output signal from the low frequency converter 4 in a MESECAM mode in accordance with the synchronous signal as a drive control signal.

Also, the conventional video signal processing apparatus comprises a first switch 10 for switching the output signal from the low frequency converter 4 to the PAL processor 7 or the MESECAM processor 9 in response to a first switching control signal, a second switch 11 for selectively outputting one of output signals from the PAL, MESECAM and SECAM processors 7, 9 and 8 in response to a second switching control signal, a first switching control signal generator 12 for processing the output signal from the low frequency converter 4 in accordance with the synchronous signal as a drive control signal to discriminate whether the color mode to be processed is the PAL mode or the MESECAM mode and applying the first switching control signal to the first switch 10 in accordance with the discriminated result, a second switching control signal generator 13 for processing the inputted chrominance signal in accordance with the synchronous signal as a drive control signal to discriminate whether the color mode to be processed is the SECAM mode and applying the second switching control signal to the second switch 11 in accordance with the discriminated result, a Y/C mixer 14 for mixing the corresponding color mode chrominance signal outputted from the second switch 11 and an output signal from the luminance signal processor 6, and a line amplifier 15 for amplifying an output signal from the Y/C mixer 14 by a predetermined level.

The frequency converter 4 includes an oscillator 4a for generating a predetermined frequency of signal, a main converter 4b for outputting a difference signal between an output signal from the oscillator 4a and the inputted chrominance signal, a band pass filter 4c for passing a first frequency region of an output signal from the main converter 4b, a phase detector 4d for detecting the presence of a phase error in an output signal from the band pass filter 4c, and a color killer 4e for removing the detected portion of the chrominance signal if the phase detector 4d detects the phase error.

In the preferred embodiment of the invention, the oscillator 4a is a 5.06 MHz oscillator. The chrominance signal inputted in the main converter 4b is a 627 kHz signal for the PAL mode. The difference signal in the main converter 4b is a high frequency-converted signal of 4.43 MHz for the PAL mode. Also, the first frequency region may be applied both to the PAL and MESECAM modes.

The first switching control signal generator 12 includes a gate 12a for inputting the output signal from the frequency converter 4 in accordance with the synchronous signal as a drive control signal, a frequency/voltage converter 12b for frequency/voltage-converting the output signal from the low frequency converter 4 being inputted through the gate 12a, and a comparator 12c for comparing an output signal from the frequency/voltage converter 12b with a first predetermined reference voltage VR1 and outputting the first switching control signal corresponding to the PAL mode or the MESECAM mode to the first switch 10 in accordance with the compared result.

On the other hand, the second switching control signal generator 13 includes a gate 13a for inputting the chrominance signal separated by the Y/C separator 3 in accordance with the synchronous signal as a drive control signal, a frequency/voltage converter 13b for frequency/voltage-converting the chrominance signal from the Y/C separator 3 being inputted througn the gate 13a, and a comparator 13c for comparing an output signal from the frequency/voltage converter 13b with a second predetermined reference voltage VR2 and outputting the second switching control signal corresponding to the SECAM mode to the second switch 11 in accordance with the compared result.

In the preferred embodiment of the invention, the first and second switching control signal generators 12 and 13 are one-chip devices, Model LA 7311 and Model BA 7025L, respectively available from Sanyo Company, Japan and ROHM Company. The PAL processor 7 and the MESECAM processor 9 are one-chip device, Model LA 7330, available from Sanyo Company. Also, the SECAM processor 8 is one-chip device, Model BA 7107, available from ROHM Company.

The operation of the conventional video signal processing apparatus with the above-mentioned construction will now be described.

First, the video signal is detected by the VCR head 1. This video signal is amplified by the predetermined level by the equalizing amplifier 2. The chrominance signal and the luminance signal are separated from the amplified signal from the equalizing amplifier 2 by the Y/C separator 3. The separated luminance signal is inputted to the synchrorous separator 5 and the synchronous signal is then separated from the separated luminance signal by the synchronous separator 5. The luminance signal, from which the synchronous signal is separated, is processed by the luminance signal processor 6 and then the processed luminance signal is inputted to the Y/C mixer 14. On the other hand, the chrominance signal separated by the Y/C separator 3 is inputtea simultaneously to the frequency converter 4 and the SECAM processor 8.

In the frequency converter 4, the main converter 4b subtracts the predetermined frequency of chrominance signal inputted therein, 627 KHz for the PAL mode, from 5.06 MHz frequency signal outputted from the oscillator 4a, to converter the chrominance signal into the high frequency signal, about 4.43 MHz for the PAL mode, 4.25 MHz/4.4 MHz for the MESECAM mode and (1.06 MHz/1.1 MHz for the SECAM mode).

In the SECAM mode, SECAM processor 8 multiplies the predetermined sequency of chrominance signal 1.05 MHz/1.1 MHz by 4 times to make 4.25 MHz/4.4 MHz for the SECAM mode.

The band pass filter 4c filters the low frequency signal from the main converter 4b to output only signal of frequency corresponding to the PAL mode and the MESECAM mode. The output signal from the band pass filter 4c is applied to the input of the first switch 10.

Also, the output signal from the band pass filter 4c is inputted to the pnase detector 4d. The phase detector 4d on the presence of the phase error in the inputted signal outputs the inputted signal to the color killer 4e for the removing of he phase error signal. The phase detector 4d on the absence of the phase error in the inputted signal feeds back the inputted signal to the main converter 4b.

On the other hand, the output signal from the band pass filter 4c is inputted to the gate 12a in the first switching control signal generator 12. The gate 12a outputs only color burst signal of the output signal from the band pass filter 4c in the frequency converter 4 to the frequency/voltage converter 12b in accordance with the synchronous signal from the synchronous separator 5 as a drive control signal.

The frequency/voltage converter 12b outputs a voltage signal corresponding to the frequency of the inputted signal to one input terminal of the comparator 12c, the other input terminal of which is applied with the reference voltage signal VR1. If the voltage signal from the frequency/voltage converter 12b is higher than the reference voltage signal VR1, he comparator 12c outputs tne first switching control signal of level corresponding to the PAL mode to the first switch 10. If the voltage signal from the frequency/voltage converter 12b is lower than the reference voltage signal, the comparator 12c outputs the first switching control signal of level corresponding to the MESECAM mode to the first switch 10.

As a result, the first switch 10 applies the output signal from the frequency converter 4 to the PAL processor 7 or the MESECAM processor 9 in accordance with levels of the switching control signal from the first switching control signal generator 12. Then, the chrominance signal processed in the PAL mode or the MESECAM mode by the PAL processor 7 or the MESECAM processor 3 is applied to one input of the second switch 11.

On the other hand, the SECAM processor 8 inputs the chrominance signal from the Y/C separator 3 simultaneously with the low frequency converter 4. The SECAM processor 8 multiplies the inputted chrominance signal in the SECAM mode by 4 times, processes the inputted chrominance signal in the SECAM mode and outputs the processed chrominance signal to the other input of the second switch 11.

In the second switching control signal generator 13, the gate 13a outputs only color burst signal of the chrominance signal outputted from the Y/C separator 3 to the frequency/voltage converter 13b in accordance with the synchronous signal from the synchronous separator 5 as a drive control signal.

The frequency/voltage converter 13b outputs a voltage signal corresponding to the frequency of the inputted signal to one input terminal of the comparator 13c, the other input terminal of which is applied with the reference voltage signal VR2. The comparator 13c compares the inputted voltage signal with the reference voltage signal VR2 to discriminate whether the color mode to be processed is the SECAM mode and outputs the second switching control signal of level in accordance with the discriminated result to the second switch 11.

As a result, the second switch 11 outputs one of the output signal from the PAL processor 7 or the MESECAM processor 9 and the output signal from the SECAM processor 8 to the Y/C mixer 14.

The Y/C mixer 14 then mixes the luminance signal from the luminance signal processor 6 and the chrominance signal from the second switch 11 and outputs the mixed signal to the line amplifier 15.

The line amplifier 15 amplifies the mixed, video signal from the mixer 14 and outputs the amplified, video signal.

For the purpose of understanding of the invention, the above-mentioned synchronous signal and color burst signal will now be described.

In the television application, in transmission of the video signal, there is a necessity for coinciding completely a horizontal scanning and a vertical scanning with each other between a transmitter and a receiver. For reasons of this necessity, the synchronous signal is used. A pulse signal for determining an initial point of each of scanning lines is referred to as a horizontal synchronous signal and a pulse signal for determining an initial point of each of fields is referred to as a vertical synchronous signal. The horizontal and vertical synchronous signals are transmitted during a blanking interval of the video signal by inserting the corresponding pulse signals of the opposite polarity to the video signal into the video signal. At this time, the pulse width of the horizontal synchronous signal is narrow, while that of the vertical synchronous signal is wide, for the purpose of easiness of separation of signal waves in the receiver. Also, in the video signal of color, a chrominance subcarrier as a base for demodulating the transmitted, modulated chrominance signal is inserted next to the horizontal synchronous signal (this portion is referred to as a back porch) as a burst of sine wave. This burst is referred to as the color burst signal.

However, the conventional viceo signal processing apparatus for the VCR has a disadvantage, in that the color mode is discriminated by utilizing a difference among different modulation frequencies in the color modes, the PAL mode, the SECAM mode and the MESECAM mode. That is, the conventional apparatus is susceptible to the influence of a noise, since the difference is little among different natural frequencies in the color modes (PAL:627 KHz, MESECAM:560 KHz and 810 KHz, SECAM:1.1 MHz). This is applied more particularly to the PAL mode and MESECAM more.

For this reason, the rate of error generation is higher in the discrimination of the color modes, disabling the accurate discrimination of the color modes and thus the correct processing of the chrominance signal. In result, the reliability of the VCR is reduced.

## SUMMARY OF THE INVENTION

Therefore, the present invention has been made in view of the above problems, and an object of the present invention is to provide a video cassette recorder having a video signal processing apparatus for a VCR, for frequency-multiplying a color burst signal of the inputted chrominance signal by a predetermined number of times to extend a difference among different center frequencies in color modes and discriminating the color modes in accordance with the extended frequency difference, so that the influence of a noise can be removed and the color mode can be discriminated accurately.

The solution of said problem in set out in claim 1. Dependent claim 2 comprises an advanteous embodiment of the video cassette recorder of claim 1.

## BRIEF DESCRIPTION OF THE DRAWINGS

The present invention will be more clearly understood from the following detailed description taken in conjunction with the accompanying drawings, in which:

Fig. 1 illustrates a frequency spectrum of chrominance signals modulated in accordance with color modes;
Fig. 2 illustrates a frequency spectrum of the original chrominance signals corresponding to the color modes;
Fig. 3 is a block diagram of a conventional video signal processing apparatus for a VCR; and
Fig. 4 is a block diagram of a video signal processing apparatus for the VCR in accordance with the present invention.

## DETAILED DESCRIPTION OF PREFERRED EMBODIMENTS

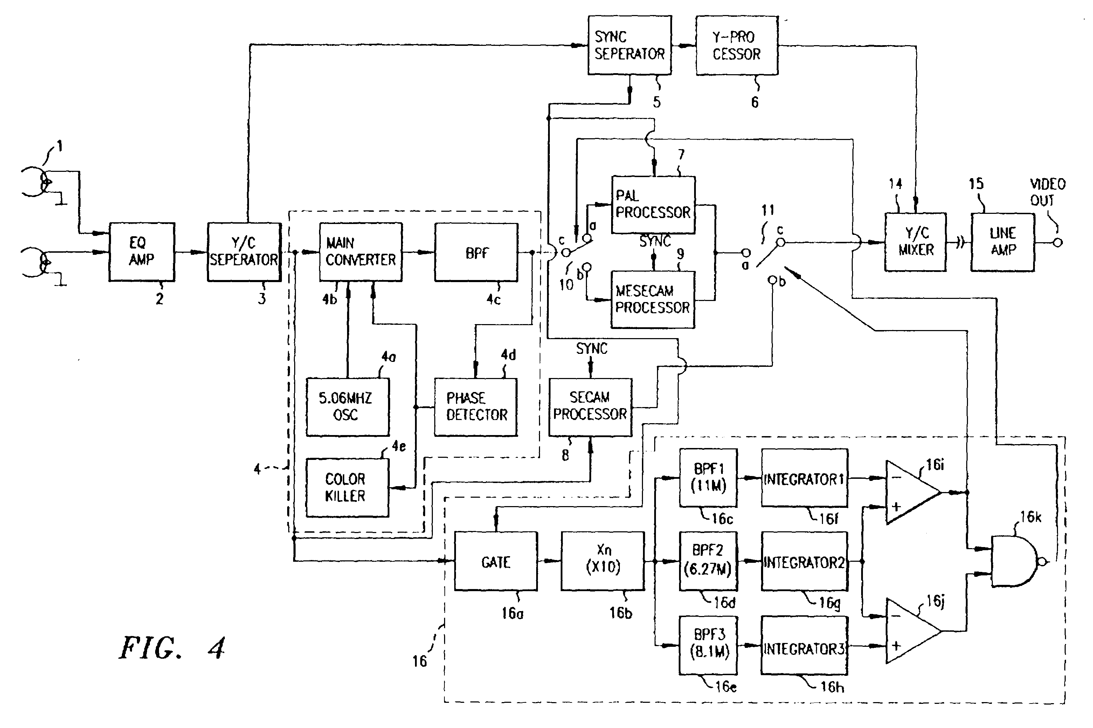

First, a construction of a video signal processing apparatus for a VCR in accordance with the present invention will be described with reference to Fig. 4.

With reference to Fig. 4, there is shown a block diagram of the video signal processing apparatus for the VCR in accordance with the present invention. The construction shown in this drawing is the same as that shown in Fig. 3, with the exception that color mode discriminating means 16 is substituted for the first and second switching control signal generators 12 and 13 in Fig. 3. Hence, explanation of the same portions may be omitted.

The color mode discriminating means 16 comprises a gate 16a for inputting only color burst signal of the separated chrominance signal from the Y/C separator 3 in accordance with the synchronous signal as a drive control signal, a frequency multiplier 16b for frequency-multiplying an output signal from the gate 16a by ten times to extend a frequency deviation among respective color modes at a full value, first through third band pass filters 16c-16e, each for inputting an output signal from the frequency multiplier 16b simultaneously and passing only respective signals of the center frequencies frequency-multiplied respectively corresponding to the PAL mode, MESECAM mode and the SECAM mode, first through third integrators 16f-16h, each for integrating respective output signals from the first through third band pass filters 16c-16e to smooth the output signals from the band pass filters 16c-16e, a first comparator 16i for comparing an output signal from the first integrator 16f with an output signal from the second integrator 16g and outputting the second switching control signal to the second switch 11 in accordance with the compared result, a second comparator 16j for comparing the output signal from the second integrator 16g with an output signal from the third integrator 16h, and a NAND gate 16k for NANDing an output signal from the first comparator 16i and an output signal from the second comparator 16j and outputting the NANDed signal to the first switch 10 as the first switching control signal.

Herein, the first band pass filter 16c passes only signal of the center frequency 11 MHz corresponding to the SECAM mode. The second band pass filter 16d passes only signal of the center frequency 6.27 MHz corresponding to the PAL mode. Also, the third band pass filter 16e passes only signal of the center frequency 8.1 MHz corresponding to the MESECAM mode.

Now, the operation of the video signal processing apparatus with the above-mentioned construction in accordance with the present invention will be described.

First, the video signal is detected by the VCR head 1. This video signal is amplified by the predetermined level by the equalizing amplifier 2. The chrominance signal and the luminance signal are separated from the amplified signal from the equalizing amplifier 2 by the Y/C separator 3. The separated luminance signal is inputted to the synchronous separator 5 and the synchronous signal is then separated from the separated luminance signal by the synchronous separator 5. The luminance signal, from which the synchronous signal is separated, is processed by the luminance signal processor 6 and then the processed luminance signal is inputted to the Y/C mixer 14. In the Y/C mixer 14, the processed luminance signal is mixed with one of output signals from the PAL processor 7, the SECAM processor 8 and the MESECAM processor 9. In result, the mixed, video signal is outputted from the mixer 14.

On the other hand, the chrominance signal separated by the Y/C separator 3 is applied to the input of the first switch 10 through the frequency converter 4 for the PAL/MESECAM mode. Also, the separated chrominance signal is inputted to the SECAM processor 8 and to the gate 16a in the color mode discriminating means 16.

From the chrominance signal inputted to the gate 16a is separated the color burst signal in accordance with the synchronous signal from the synchronous separator 5. Only color burst signal from the gate 16a is inputted to the frequency multiplier 16b. Upon receiving the color burst signal from the gate 16a, the frequency multiplier 16b frequency-multiplies the inputted color burst signal by ten times and outputs the frequency-multiplied color burst signal to the first through third band pass filters 16c-16e corresponding to respective color modes.

As a result, the color burst signal is frequency-multiplied from 627 KHz to 6.27 MHz for the PAL mode, from 660/810 KHz to 6.6/8.1 MHz for the MESECAM mode and from 1.1 MHz to 11 MHz for the SECAM mode.

The output signals from the first through third band pass filters 16c-16e are integrated respectively by the first through third integrators and thus converted into DC voltage signals. At this time, the first band pass filter 16c passes only color burst signal frequency-multiplied by ten times corresponding to the SECAM mode. The second band pass filter 16d passes only color burst signal frequency-multiplied by ten times corresponding to the PAL mode. Also, the third band pass filter 16e passes only cclor burst signal frequency-multiplied by ten times corresponding to the MESECAM mode.

For example, when the output signal from the VCR head 1 is the video signal corresponding the PAL mode, the output signal from the second band pass filter 16d is highest and thus the output signal from the second integrator 16g is highest. For this reason, the output signal from the first comparator 16i is high, enabling the second switch 11 to be connected to the output of the PAL processor 7. Also, the output signal from the second comparator 16j is low and thus the output signal from the NAND gate 16k is high, enabling the first switch 10 to be connected to the input of the PAL processor 7.

This is because, in the first and second switches 10 and 11, the central terminals c are connected to the variable terminals a when the switching control signals are high and to the variable terminals b when the switching control signals are low. If the central terminals c of the first and second switches 10 and 11 are connected to the variable terminals a in this manner, the video signal detected by the VCR heac 1 corresponding to the PAL mode is processed by the PAL processor and the processed signal is applied to the Y/C mixer 14.

When the output signal from the VCR head 1 is the video signal corresponding to the MESECAM mode, the output signal from the third band pass filter 16e is highest and thus the output signal from the third integrator 16h is highest. As a result, the output signal from the second comparator 16j is high.

The relationship among frequencies in the color modes is as follows:

SECAM (11 MHz) > MESECAM (6.6/8.1 MHz) > PAL (6.27 MHz)

Also, the difference between center frequencies in the MESECAM mode and the PAL mode is smaller than that between center frequencies in the MESECAM mode and the SECAM mode. For this reason, a portion of signal corresponding to the MESECAM mode is integrated by the second integrator 16g via the second band pass filter 16c for the PAL mode. This results in the output signal from the second integrator 16g being higher than the output signal from the first integrator 16f.

As a result, the output signal from the first comparator 16i is high, enabling the central terminal c of the second switch 11 to be connected to the variable terminal a. Also, the cutout signal from the NAND gate 16k is low, enabling the central terminal c of the first switch 10 to be connected to the variable terminal b. In this case, the chrominance signal corresponding to the MESECAM mode is processed by the MESECAM processor 9.

Similarly, in the SECAM mode, the output signal from the first band pass filter 16c is highest and thus the output signal from the first integrator 16f is highest. For this reason, the output signal from the first comparator 16i is low, enabling the central terminal c of the second switch 11 to be connected to the variable terminal b. As a result, the chrominance signal corresponding to the SECAM mode is processed by the SECAM processor 8.

As hereinbefore described, in accordance with the present invention, there is provided the video signal processing apparatus for the VCR, which is capable of frequency-multiplying the color burst signal of the chrominance signal by a predetermined number of times to overcome a little difference among different center frequencies in color modes and discriminating the color modes in accordance with the extended frequency difference, so that the generation of error in discriminating the color modes can be reduced. Therefore, the chrominance signal can be processed suitably to and in accordance with the color modes, thereby resulting in the improvement in the reliability of the VCR.

**Claims**

1.  A video cassette recorder having a video signal processing apparatus, which is separating each one of different video signal modes, derived from different methods such as PAL method, SECAM method or MESECAM method, into a luminance signal and a color signal, comprising:

    a plurality of color signal processing circuits (7,8,9) wherein each one of them is capable of processing one mode of said color signal,

    selecting means (4,5,16) for selecting one of said color signal processing circuits (7,8,9) in accordance with a desired mode wherein the separated color signal is processed with said selected color signal processing circuit,

mixing means (14) for mixing the separated luminance signal and the processed color signal to form a video signal and

processing means (15) for processing the video signal
**characterized in that**

said selecting means (5,16) comprise

a color burst extraction part including a sync. separator (5) for taking the horizontal sync. signal of the separated luminance signal and a gate part (16a) for taking a color burst signal by the horizontal sync. signal and

a color mode selection part (16b-16k, 10,11) for detecting the carrier frequency of the color burst signal and then multiplying said carrier frequency to discriminate the color mode corresponding to the video signal by using the frequency-multiplied color burst signal and for selecting one of said color signal processing circuits (7,8,9) or the discriminated color mode.

2.  A video cassette recorder in accordance with claim 1,
    **characterized in that**

    the color mode selection part (16b-16k,10,11) comprises:
    band pass filters (16c,16d,16e) for passing through a carrier frequency band corresponding to each mode of color signal,
    a determination part (16f-16k) for comparing the magnitude of the color burst signal passing through each one of the band pass filters (16c,16d,16e) with a reference magnitude to discriminate the color modes and
    a selection part (10,11) for selecting a corresponding color signal processing circuit (7,8,9) in accordance with the color mode discriminated by the determination part (16f-16k).

**Patentansprüche**

1.  Videocassetenrecorder mit einem Videosignalverarbeitungsgerät, welches jedes von unterschiedlichen Videosignalmoden voneinander trennt (separiert), welche von verschiedenen Methoden, wie die PAL-Methode, SECAM-Methode oder MESECAM-Methode, abgeleitet sind, in ein Luminanzsignal und ein Farbsignal, mit:

einer Mehrzahl von Farbsignalverarbeitungseinrichtungen (7,8,9), wobei jede fähig ist, ein Modus des Farbsignals zu verarbeiten;

Auswahleinrichtungen (4,5,16), welche eines der Farbsignalverarbeitungseinrichtungen (7,8,9) mit Rücksicht auf einen gewünschten Modus auswählen, wobei das getrennte Farb-signal von der ausgewählten Farbsignalverar-beitungseinrichtung verarbeitet wird;

eine Mischmitteleinrichtung (14), die das getrennte Luminanzsignal und das verarbeitete Farbsignal miteinander vermischt, um ein Videosignal zu erhalten, und

eine Verarbeitungseinrichtung zum Verarbeiten des Videosignals,
**dadurch gekennzeichnet,**

daß die Auswahleinrichtungen (5,16)

einen Farbsynchronimpulsextrahierungsteil enthält, welcher einen Synchronseparator (5), der das horizontale Synchronsignal des getrennten (separierten) Luminanzsignals bestimmt, einen Torteil (Gate) (16a), um ein Farbsynchronimpulssignal durch das horizontale Synchronsignal aufzunehmen und ein Farbmodusauswahlteil (16b, 16k, 10, 11) aufweist, um die Trägerfrequenz des Farbsynchronimpulssignals zu bestimmen, um dann die Trägerfrequenz zu multiplizieren, um den Farbmodus, der mit dem Videosignal korrespondiert, durch Verwendung des frequenz-multipli-zierten Farbsynchronimpulssignals zu diskrimi-nieren bzw. zu trennen und daß eine Auswahl der Farbsignalverarbeitungseinrichtungen (7,8,9) für den diskriminierten bzw. getrennten Farbmodus stattfindet.

2. Ein videocassettenrecorder nach Anspruch 1,
**dadurch gekennzeichnet,**

daß das Farbmodusauswahlteil (16b-16k, 10, 11)

Bandpassfilter (16c, 16d, 16e), zum Durchlassen eines Trägerfrequenzbandes, weiches mit jedem Modus des Farbsignal korrespondiert,

einen Bestimmungsteil (16f-16k) zum Vergleichen der Größe bzw. Absolutwerte der Farbsynchronimpulssignale, die durch jede der Bandpassfilter (16c,16d,16e) durchgelassen werden, mit einer Referenzgröße bzw. einem Bezugsabsolutwert, um die Farbmodem zu diskriminieren bzw. zu trennen, und

einen Auswahlteil (10,11) zur Auswahl einer entsprechenden Farbsignalverarbeitungseinrichtung (7, 8, 9) in Übereinstimmung mit den Farbmoden enthält, die durch den Bestimmungsteil (16f-16k) diskriminiert bzw. getrennt sind.

## Revendications

1. Magnétoscope équipé d'un appareil de traitement du signal vidéo, qui sépare chacun des signaux vidéo de modes différents, provenant de différents procédés tels que les procédés PAL, SECAM ou MESECAM, en un signal de luminance et un signal de couleur, comprenant :

une pluralité de circuits de traitement du signal couleur (7, 8, 9) dont chacun est capable de traiter un seul mode dudit signal couleur,
des moyens de sélection (4, 5, 16) pour sélectionner l'un desdits circuits de traitement du signal couleur (7, 8, 9) en fonction du mode désiré grâce à quoi le signal couleur séparé est traité par ledit circuit sélectionné de traitement du signal couleur,
des moyens mélangeurs (14) pour mélanger le signal de luminance séparé et le signal couleur traité afin de former un signal vidéo et
des moyens de traitement (15) pour traiter le signal vidéo
caractérisé en ce que
lesdits moyens de sélection (5, 16) comprennent :
une partie d'extraction d'une rafale de couleur comprenant un séparateur de synchronisation (5) pour prélever le signal de synchronisation horizontale du signal de luminance séparé et une partie de porte (16a) pour conditionner un signal de rafale de couleur fonction du signal de synchronisation horizontale et
une partie de sélection du mode couleur (16b-16k, 10, 11) pour détecter la fréquence porteuse du signal de rafale de couleur puis multiplier ladite fréquence porteuse afin de discriminer le mode de couleur correspondant au signal vidéo en utilisant le signal de rafale de couleur multiplié en fréquence et sélectionner l'un desdits circuits de traitement du signal couleur (7, 8, 9) pour le mode de couleur discriminé.

2. Magnétoscope selon la revendication 1, caractérisé en ce que

la partie de sélection du mode de couleur (16b-16k, 10, 11) comprend :

des filtres passe-bande (16c, 16d, 16e) qui laissent passer une bande de fréquence porteuse correspondant à chaque mode du signal couleur,

une partie de détermination (16f-16k) pour comparer l'amplitude du signal de rafale de couleur traversant chacun des filtres passe-bande (16c, 16d, 16e) avec une amplitude de référence afin de discriminer les différents modes de couleur et

une partie de sélection (10, 11) pour sélectionner un circuit correspondant de traitement du signal couleur (7, 8, 9) selon le mode de couleur discriminé par la partie de détermination (16f-16k).

## FIG. 2

PAL

4.43MHz

SECAM

4.25
MHz
4.4
MHz

## FIG. 1

PAL

627KHz

MESECAM

560KHz   810KHz

SECAM

1.06   1.1
MHz   MHz

FIG. 3

FIG. 4